# EUROPEAN PATENT APPLICATION

(11) **EP 1 339 127 A1**
(43) Date of publication of application: **27.08.2003**
(21) Application number: 00969946.3
(22) Date of filing: 20.10.2000
(51) Int. Cl.: H01M 10/40

(54) **SOLID POLYMER ELECTROLYTE AND CELL CONTAINING THE ELECTROLYTE**

(71) Applicant: DAINIPPON INK AND CHEMICALS, INC., Itabashi-ku, Tokyo 174-8520 (JP)
(72) Inventor: YONEHARA, Hisatomo, Sakura-shi, Chiba 285-0034 (JP); MARUYAMA, Kazunori, Chiba-shi, Chiba 260-0844 (JP); SAKURAI, Yoshinobu, Kitaadachi-gun, Saitama 362-0807 (JP); TKAHASHI, Katsuji, Sakura-shi, Chiba 285-0831 (JP)
(74) Representative: Albrecht, Thomas, Dr.
(86) International application number: JP0007327
(87) International publication number: WO02035636

(57) **Abstract**

A solid polymer electrolyte made of a polymer of a liquid photopolymerizable composition is provided, which is polymerized by irradiation with light at practical light intensity and amount without using a general-purpose photopolymerization initiator contributing to an efflux from the polymer and is also liquid at normal temperature. A cell using the electrolyte is also provided. A solid polymer electrolyte is made of a solid obtained by photopolymerizing a photopolymerizable composition comprising (a) an electrolyte and (b) a polymerizable compound having a polyoxyalkylene chain, wherein the photopolymerizable composition contains a photopolymerizable maleimide compound.

## Description

### TECHNICAL FIELD

The present invention relates to a solid polymer electrolyte and a gel-like solid polymer electrolyte, which are useful in lithium ion cells, lithium metal cells, electric double layer condensers, electrochromic elements and solar cells and, more particularly, to a solid polymer electrolyte made of a photopolymerizable composition containing a specific maleimide derivative which is polymerized by irradiation with a practical amount of ultraviolet light in the absence of a general-purpose photopolymerization initiator, and to a cell produced by using the solid polymer electrolyte.

### BACKGROUND ART

Heretofore, liquid electrolytes have been used in electrochemical elements such as primary cells, secondary cells, condensers, electrochromic displays and wet solar cells. However, the liquid electrolyte has problems such as occurrence of liquid leakage and poor long-term reliability. Due to size-reduction requirements, a whole solid electrolyte has been studied. Thus, a solid electrolyte has attracted special interest recently as a new ionic conductor to replace conventional electrolyte solutions, and tests of applying the solid electrolyte to entire solid primary cells, secondary cells and electric double layer condensers have been actively carried out (Japanese Unexamined Patent Application, First Publication No. Sho 55-98480).

Japanese Unexamined Patent Application, First Publication No. Sho 55-35420 discloses a gel-like solid polymer electrolyte wherein an electrolyte solution is entrapped in a polymer matrix for the purpose of improving the ionic conductivity. As methods of producing the gel-like solid polymer electrolyte, Japanese Unexamined Patent Application, First Publication No. Sho 63-94501, Japanese Patent Application, First Publication No. Sho 63-94563 and Japanese Patent Application, First Publication No. Hei 5-109310 disclose a method of mixing a polymer with an electrolyte and dissolving the polymer, a method of adding an electrolyte or an electrolyte solution in a composition containing a general-purpose radical polymerization initiator, a polymerizable monomer and/or an oligomer and thermally polymerizing the mixture and a method of adding an electrolyte or an electrolyte solution in a general-purpose photoradical polymerization initiator, a polymerizable monomer and/or an oligomer and subjecting the mixture to ultraviolet light polymerization, respectively.

However, the solid polymer electrolyte has a problem in that rapid reduction in the charge-discharge capacity is caused by the polymerization initiator when the charge-discharge operation is repeated. As a means for solving the problem, Japanese Patent Application, First Publication No. Hei 10-158418 discloses a method of removing the residual polymerization initiator by a heat treatment or an ultrasonic treatment. However, this method has problems such as poor productivity because the solid polymer electrolyte obtained by the polymerization is subjected to ultrasonic cleaning or a heat treatment at a temperature within a range from 100 to 300°C.

The gel-like solid polymer electrolyte is generally formed by a method of polymerizing a polymerizable composition containing a polymerizable compound, an electrolyte solution and a general-purpose thermal polymerization or photopolymerization initiator using heat or energy rays to form a crosslinked network, thereby to obtain a gel-like solid polymer electrolyte (Japanese Patent Application, First Publication No. Hei 10-251318) and interposing the gel-like solid polymer electrolyte between two kinds of electrodes or forming it on one electrode, thereby to form a cell. It is difficult to insert the step of removing the residual polymerization initiator by the method disclosed in Japanese Patent Application, First Publication No. Hei 10-158418 after polymerizing the polymerizable composition using heat or energy rays to form a crosslinked network.

As the method of forming the solid polymer electrolyte without using a polymerization initiator, Japanese Patent Application, First Publication No. Hei 5-290885, Japanese Patent Application, First Publication No. Hei 5-326019, Japanese Patent Application, First Publication No. Hei 9-17449, Japanese Patent Application, First Publication No. Hei 9-17450 and Japanese Patent Application, First Publication No. Hei 10-112321 disclose a method of polymerizing and crosslinking by irradiation with an electron beam to form an electrolyte. The polymerizable composition can be polymerized and crosslinked by irradiation with electron beam without using a thermal polymerization or photopolymerization initiator and drawbacks contributing to the initiator can be solved. When using electron beam, there arise problems such as limitation of manufacturing conditions and security of safety during the operation.

The methods of adding an electrolyte or an electrolyte solution to a polymerizable monomer or oligomer containing a conventionally known thermal polymerization or photopolymerization initiator and subjecting the mixture to thermal polymerization or ultraviolet light polymerization to obtain a solid electrolyte disclosed in Japanese Patent Application, First Publication No. Sho 55-35420, Japanese Patent Application, First Publication No. Sho 63-94501, Japanese Patent Application, First Publication No. Sho 63-94563 and Japanese Patent Application, First Publication No. Hei 5-109310 had a problem in that rapid reduction in the charge-discharge capacity which is caused by the polymerization initiator when the charge-discharge operation is repeated.

The method of removing the residual polymerization initiator by a heat treatment or an ultrasonic treatment after polymerization disclosed in Japanese Patent Application, First Publication No. Hei 10-158418 has problems such as poor productivity and poor applicability to a gel-like solid polymer electrolyte.

As the method of forming a solid polymer electrolyte without using a polymerization initiator, Japanese Patent Application, First Publication No. Hei 5-290885, Japanese Patent Application, First Publication No. Hei 5-326019, Japanese Patent Application, First Publication No. Hei 9-17449, Japanese Patent Application, First Publication No. Hei 9-17450 and Japanese Patent Application, First Publication No. Hei 10-112321 propose a method of polymerizing and crosslinking by irradiation with electron beam and the above drawbacks can be solved. However, when using electron beam, there arise problems such as limitation of manufacturing conditions and security of safety during the operation.

### DISCLOSURE OF INVENTION

Objects of the present invention are to provide a solid polymer electrolyte made of a polymer of a liquid photopolymerizable composition, which is polymerized by irradiation with light at practical light intensity and amount without using a general-purpose photopolymerization initiator contributing to an efflux from the polymer and is also liquid at normal temperature, and to provide a cell using the electrolyte.

The present inventors disclosed, in EP-A-0 878 482, that (i) a maleimide derivative having a specific structure is polymerized by irradiation with ultraviolet light at practical light intensity and (ii) the maleimide derivative is copolymerized with (meth)acrylate or vinyl ether, without using a general-purpose photopolymerization initiator.

The present inventors have intensively researched to achieve the above objects and found that it is possible to form a solid electrolyte by using a photopolymerizable maleimide, which exhibits ionic conductivity at a practical level in charge-discharge characteristics as compared with a solid electrolyte obtained by polymerizing using a general-purpose photopolymerization initiator. Thus, the present invention has been completed.

To achieve the above objects, the present invention provides (I) a solid polymer electrolyte made of a solid obtained by photopolymerizing a photopolymerizable composition (hereinafter referred to as a "photopolymerizable composition used in the present invention") comprising (a) an electrolyte and (b) a polymerizable compound having a polyoxyalkylene chain, wherein the photopolymerizable composition contains a photopolymerizable maleimide compound.

To achieve the above objects, the present invention provides (II) a cell comprising electrodes and the solid polymer electrolyte interposed between the electrodes.

### BRIEF DESCRIPTION OF DRAWING

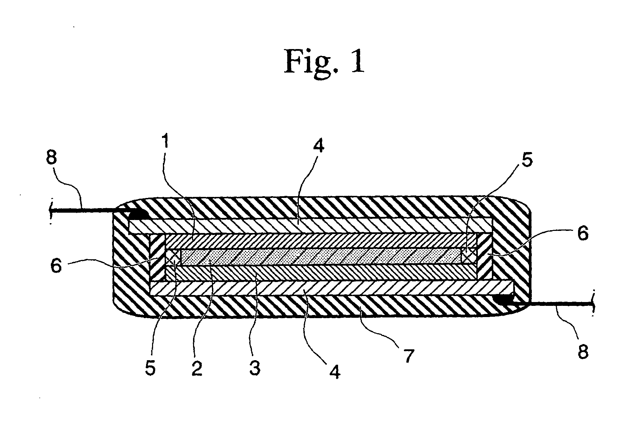

Fig. 1 is a schematic sectional view of a lithium ion secondary cell using a solid polymer electrolyte of the present invention. In Fig. 1, the reference symbol 1 denotes a positive electrode, 2 denotes a solid polymer electrolyte, 3 denotes a negative electrode, 4 denotes a current collector, 5 denotes a spacer, 6 denotes an insulating resin sealing agent, 7 denotes an insulating resin sealing agent, and 8 denotes a lead wire.

### BEST MODE FOR CARRYING OUT THE INVENTION

The photopolymerizable maleimide compound used to form the solid polymer electrolyte of the present invention is not specifically limited, as long as it is a maleimide which exhibits photopolymerizability, but it is preferably a compound having an N-alkylmaleimide structure or an N-cycloalkylmaleimide structure, and particularly preferably, a compound having a polyoxyalkylene chain.

The compound having an N-alkylmaleimide structure or an N-cycloalkylmaleimide structure is preferably a compound having a maleimide group, which is represented by the general formula (1): 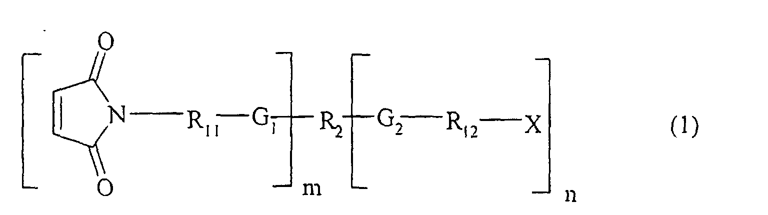 wherein m represents an integer of 1 to 6; n represents an integer of 0 to 5 and the sum of m and n is an integer of 1 to 6; R₁₁ and R₁₂ each independently represents a straight-chain or branched aliphatic hydrocarbon group, or an alicyclic hydrocarbon group; G₁ and G₂ each independently represents at least one group selected from the group consisting of a single bond, a straight-chain or branched aliphatic hydrocarbon group, an alicyclic hydrocarbon group, an ether group, an ester group, a urethane group, and a carbonate group; when m + n = 1, R₂ represents at least one group selected from the group consisting of a hydrogen atom, a straight-chain or branched aliphatic hydrocarbon group, an alicyclic hydrocarbon group, and a polyoxyalkylene chain having a hydroxyl group or an alkyl group at the end and, when m + n ≥ 2, R₂ represents at least one group selected from the group consisting of a hydrogen atom, a straight-chain or branched aliphatic hydrocarbon group, an alicyclic hydrocarbon group, and a polyoxyalkylene chain; and X represents a polymerizable functional group.

R₁₁ and R₁₂ each independently represents a straight-chain or branched aliphatic hydrocarbon group, or an alicyclic hydrocarbon group.

Examples of the aliphatic hydrocarbon group include, but are not limited to, straight-chain alkylene groups such as a methylene group, ethylene group, trimethylene group, tetramethylene group, pentamethylene group, hexamethylene group, heptamethylene group, octamethylene group, nonamethylene group, decamethylene group, undecamethylene group, and dodecamethylene group; and alkylene groups having a branched alkyl group, such as a 1-methylethylene group, 1-methyl-trimethylene group, 2-methyl-trimethylene group, 1-methyl-tetramethylene group, 2-methyl-tetramethylene group, 1-methyl-pentamethylene group, 2-methyl-pentamethylene group, 3-methyl-pentamethylene group, and neopentyl group. Examples of the alicyclic hydrocarbon group include, but are not limited to, cycloalkylene groups such as cyclopentylene groups or cyclohexylene groups; and cycloalkyl-alkylene groups having a cycloalkyl group on a main chain or side chain, such as a cyclohexylmethylene group, 1-cyclohexyl-ethylene group, 1-cyclohexyl-tetraethylene group, and 2-cyclohexyl-tetraethylene group.

In the monofunctional maleimide compounds represented by the general formula (1), G₁ and G₂ each independently represents at least one group selected from the group consisting of a single bond, a straight-chain or branched aliphatic hydrocarbon group, an alicyclic hydrocarbon group, an ether group, an ester group, a urethane group, and a carbonate group. Herein, G₁ as a single bond means that R₁₁ and R₂ are directly bonded through a single bond. Examples of the aliphatic hydrocarbon group and the alicyclic hydrocarbon group in G₁ and G₂ include those listed in R₁₁ and R₁₂.

In the maleimide compounds represented by the general formula (1), when m + n = 1, that is, in the case of a compound having a maleimide group in a molecule (hereinafter referred to as a "monofunctional maleimide compound"), R₂ represents at least one group selected from the group consisting of a hydrogen atom, a straight-chain or branched aliphatic hydrocarbon group, an alicyclic hydrocarbon group, and a polyoxyalkylene chain having a hydroxyl group or an alkyl group at the end.

Examples of the aliphatic hydrocarbon group in R₂ include straight-chain alkyl groups such as a methyl group, ethyl group, propyl group, butyl group, pentyl group, hexyl group, heptyl group, octyl group, nonyl group, decanyl group, undecanyl group, and dodecanyl group; and branched alkyl groups such as an isopropyl group, isobutyl group, sec-butyl group, isopentyl group, and neopentyl group. Examples of the alicyclic hydrocarbon group in R₂ include cycloalkyl groups such as a cyclopentyl group and cyclohexyl group; and cycloalkyl-alkylene groups having a cycloalkyl group on the main chain or side chain, such as a cyclohexylmethylene group, 1-cyclohexyl-ethylene group, 1-cyclohexyl-tetraethylene group, and 2-cyclohexyl-tetraethylene group.

Examples of the polyoxyalkylene chain in R₂ include polyoxyalkylene chains having a unit in which a straight-chain alkylene group and/or a branched alkylene group each having 1 to 6 carbon atoms are bonded through an ether bond or a repeating unit thereof. Examples of the polyoxy chain include polyoxyethylene chains, polyoxypropylene chains, and polyoxybutylene chains. The polyoxyalkylene chain preferably has a number-average molecular weight of 44 to 10000.

In the maleimide compounds represented by the general formula (1), when m + n ≥ 2, that is, in the case of a compound having a maleimide group and a polymerizable functional group totaling 2 or more in a molecule (hereinafter referred to as a "polyfunctional maleimide compound"), R₁₁ and R₁₂ each independently represents a straight-chain or branched aliphatic hydrocarbon group, or an alicyclic hydrocarbon group. Examples of R₁₁ and R₁₂ include those listed as R₁₁ when m = 1 and n = 0.

In the polyfunctional maleimide compounds represented by the general formula (1), G₁ and G₂ each independently represents at least one group selected from the group consisting of a single bond, a straight-chain or branched aliphatic hydrocarbon group, an alicyclic hydrocarbon group, an ether group, an ester group, a urethane group, and a carbonate group. Herein, G₁ or G₂ as a single bond means that R₁₁ and R₂ are directly bonded through a single bond. In G₁ or G₂, examples of the aliphatic hydrocarbon group and the alicyclic hydrocarbon group include those listed as R₁₁ in the monofunctional maleimide compounds.

In the polyfunctional maleimide compounds represented by the general formula (1), R₂ represents a straight-chain or branched aliphatic hydrocarbon group, an alicyclic hydrocarbon group or a polyoxyalkylene chain, and X represents a polymerizable functional group.

Examples of the aliphatic hydrocarbon group in R₂ include, but are not limited to, straight-chain alkylene groups such as a methylene group, ethylene group, trimethylene group, tetramethylene group, pentamethylene group, hexamethylene group, heptamethylene group, octamethylene group, nonamethylene group, decamethylene group, undecamethylene group, and dodecamethylene group; and alkylene groups having a branched alkyl group, such as a 1-methylethylene group, 1-methyl-trimethylene group, 2-methyl-trimethylene group, 1-methyl-tetramethylene group, 2-methyl-tetramethylene group, 1-methyl-pentamethylene group, 2-methyl-pentamethylene group, 3-methyl-pentamethylene group, and neopentyl group. Examples of the alicyclic hydrocarbon group in R₂ include, but are not limited to, cycloalkylene groups such as cyclopentylene groups and cyclohexylene groups; and cycloalkyl-alkylene groups having a cycloalkyl group on the main chain or side chain, such as a cyclohexylmethylene group, 1-cyclohexyl-ethylene group, 1-cyclohexyl-tetraethylene group, and 2-cyclohexyl-tetraethylene group.

Examples of the polyoxyalkylene chain in R₂ include those listed in R₂ of the monofunctional maleimide compounds.

In the maleimide compounds represented by the general formula (1), examples of the polymerizable functional group represented by X include vinyl functional groups. Among the vinyl functional groups, maleimide group, (meth)acryl group or vinyl ether group is preferred and maleimide group is particularly preferred.

Among the compounds having a maleimide group represented by the general formula (1), examples of the compound having a polyoxyalkylene chain include, but are not limited to, ether-type compounds such as ethoxy-(3-maleimidopropioxy)ethane, ethoxy-(3-maleimidopropioxy)butane, diethylene glycol (3-maleimidopropyl)methyl ether, polyethylene glycol (number-average molecular weight: 400) methyl(3-maleimidopropyl) ether, diethylene glycol (3-maleimidopropyl)methyl ether, polyethylene glycol (number-average molecular weight: 400) methyl(3-maleimidopropyl) ether, trimethylolpropanetri(3-maleimidopropyl ether), polyethylene glycol (number-average molecular weight: 400) bis(3-maleimidopropyl) ether, and polyethylene glycol (number-average molecular weight: 400) mono(3-maleimidopropyl)vinyl ether; maleimide ester-type compounds such as diethylene glycol bismaleimidoacetate, diethylene glycol monomaleimidocetate acrylate, polyethylene glycol (number-average molecular weight: 400) bismaleimidoacetate, polytetramethylene glycol (number-average molecular weight: 250) bismaleimidoacetate, polyethylene glycol (number-average molecular weight: 400) monomaleimidocapronate acrylate, trimethylolpropane trimaleimidoacetate, ethylene oxide-modified trimethylolpropane trimaleimidoacetate, ethylene oxide-modified trimethylolpropane dimaleimidoacetate monoacrylate, pentaerythritol tetramaleimidoacetate, ethylene oxide-modified pentaerythritol tetramaleimidoacetate, and ethylene oxide-modified pentaerythritol dimaleimidoacetate diacrylate; urethane compounds as a reaction product of an equivalent mixture of isophorone diisocyanate and (poly)alkylene polyol with 2-maleimide ethanol; and carbonate-type compounds such as tetraethylene glycol bis(3-maleimidopropylcarbonate).

Among the maleimide compounds represented by the general formula (1), examples of the compound having no polyoxyalkylene chain include, but are not limited to, aliphatic hydrocarbon-type maleimide compounds such as N-methylmaleimide, N-ethylmaleimide, N-propylmaleimide, N-n-butylmaleimide, N-tert-butylmaleimide, N-pentylmaleimide, N-hexylmaleimide, N-laurylmaleimide, and N-cyclohexylmaleimide; maleimide ethers such as methyl(3-maleimidopropyl) ether and tetrahydrofuryl-3-maleimidopropyl ether; maleimide esters such as methyl maleimidoacetate, ethyl maleimidocapronate, ethylene glycol monomethyl ether maleimidoacetate or tetrahydrofuryl maleimidoacetate; maleimidourethanes such as N-ethyl-(2-maleimidoethyl)carbamate; maleimide carbonates such as 2-maleimidoethyl-ethyl carbonate and 2-maleimidoethyl-isopropyl carbonate; aliphatic hydrocarbon-type maleimide compounds such as 1,1-bismaleimidomethane, 1,2-bismaleimidoethane, 1,6-bismaleimidohexane, and 1,3-bismaleimidocyclohexane; ether compounds such as 1,2-bis(3-maleimidopropioxy)ethane, 4,9-dioxa-1,12-bismaleimidododecane, and trimethylolpropanetri(3-maleimidopropyl ether); maleimide ester-type compounds such as ethylene glycol bismaleimidoacetate; and carbonate-type compounds such as bis(2-maleimidoethyl)carbonate and bis(3-maleimidopropyl) carbonate.

These maleimide compounds can be easily synthesized using a known technique such as a method described in EP-A-0 878 482.

In the photopolymerizable compositions used in the present invention, a compound having a polyoxyalkylene chain and a polymerizable functional group such as a (meth)acryl group, vinyl ether group, (meth)acrylamide group, vinyl carboxylate group, styryl group, and unsaturated dicarboxylic acid residue can be used, in addition to the maleimide compounds. Among these compounds, a compound having a (meth)acryl group and a vinyl ether group is preferred.

Examples of the compound having a polyoxyalkylene chain and a (meth)acryl group include, but are not limited to, monofunctional (poly)ether (meth)acrylates such as butoxytriethylene glycol (meth)acrylate, epichlorohydrin-modified butyl (meth)acrylate, 2-ethoxyethyl (meth)acrylate, ethylcarbitol (meth)acrylate, 2-methoxy(poly)ethylene glycol (meth)acrylate, methoxy(poly)propylene glycol (meth)acrylate, nonylphenoxypolyethylene glycol (meth)acrylate, nonylphenoxypolypropylene glycol (meth)acrylate, phenoxyhydroxypropyl (meth)acrylate, phenoxy(poly)ethylene glycol (meth)acrylate, polyethylene glycol mono(meth)acrylate, polypropylene glycol mono(meth)acrylate, and polyethylene glycol /polypropylene glycol mono(meth)acrylate; alkylene glycol di(meth)acrylates such as (poly)ethylene glycol di(meth)acrylate, (poly)propylene glycol di(meth)acrylate, (poly)butylene glycol di(meth)acrylate, and (poly)tetramethylene glycol di(meth)acrylate; polyfunctional (meth)acrylates derived from a copolymer of ethylene oxide and propylene oxide, copolymer of propylene glycol and tetrahydrofuran, copolymer of ethylene glycol and tetrahydrofuran, hydrocarbon-type polyols such as polyisoprene glycol, hydrogenated polyisoprene glycol, polybutadiene glycol and hydrogenated polybutadiene glycol, and polyhydric hydroxyl group compound such as polytetramethylene hexaglyceryl ether (tetrahydrofuran-modified compound of hexaglycerin) with (meth)acrylic acid; di(meth)acrylates of diols obtained by adding 1 mol or more of ethylene oxide, propylene oxide, butylene oxide and/or a cyclic ether such as tetrahydrofuran to 1 mol of neopentyl glycol; di(meth)acrylates of alkylene oxide modified compounds of bisphenols such as bisphenol A, bisphenol F, and bisphenol S; di(meth)acrylates of alkylene oxide modified compounds of hydrogenated bisphenols such as hydrogenated bisphenol A, hydrogenated bisphenol F, and hydrogenated bisphenol S; di(meth)acrylates of alkylene oxide modified compounds of tris phenols; di(meth)acrylates of alkylene oxide modified compounds of hydrogenated tris phenols; di(meth)acrylates of alkylene oxide modified compounds of p,p'-bisphenols; di(meth)acrylates of alkylene oxide modified compounds of hydrogenated bisphenols; di(meth)acrylates of alkylene oxide modified compounds of p,p'-dihydroxybenzophenones; mono-, di-, or tri(meth)acrylates of triols obtained by adding 1 mol or more of ethylene oxide, propylene oxide, butylene oxide and/or a cyclic ether compound such as tetrahydrofuran to 1 mol of trimethylolpropane or glycerin; mono-, di-, tri-, or tetra(meth)acrylates of triols obtained by adding 1 mol or more of ethylene oxide, propylene oxide, butylene oxide and/or a cyclic ether compound such as tetrahydrofuran to 1 mol of pentaerythritol or ditrimethylolpropane; monofunctional (poly)ether (meth)acrylates or polyfunctional (poly)ether (meth)acrylates of polyhydric alcohols such as triols, tetraols, pentaols, and hexaols derived from mono- or poly(meth)acrylates of triols obtained by adding 1 mol or more of ethylene oxide, propylene oxide, butylene oxide and/or a cyclic ether compound such as tetrahydrofuran to 1 mol of dipentaerythritol; (meth)acrylates of polyester polyols composed of a diol component such as (poly)ethylene glycol, (poly)propylene glycol, (poly)tetramethylene glycol, (poly)butylene glycol, (poly)pentanediol, (poly)methylpentanediol, and (poly)hexanediol, and a polybasic acid such as maleic acid, fumaric acid, succinic acid, adipic acid, phthalic acid, hexahydrophthalic acid, tetrahydrophthalic acid, itaconic acid, citraconic acid, Het acid, himic acid, chlorendic acid, dimer acid, alkenylsuccinic acid, sebacic acid, azelaic acid, 2,2,4-trimethyladipic acid, 1,4-cyclohexanedicarboxylic acid, terephthalic acid, 2-sodium sulfoterephthalic acid, 2-potassium sulfoterephthalic acid, isophthalic acid, 5-sodiumsulfoisophthalic acid, 5-potassium sulfoisophthalic acid, orthophthalic acid, 4-sulfophthalic acid, 1,10-decamethylenedicarboxylic acid, muconic acid, oxalic acid, malonic acid, glutaric acid, trimellitic acid, and pyromellitic acid; (poly)ester (meth)acrylates such as (meth)acrylates of cyclic lactone-modified polyester diols composed of a diol component, a polybasic acid, and ε-caprolactone, γ-butyrolactone, δ-valerolactone, or methylvalerolactone; urethane (meth)acrylates composed of a polyol and a polyisocyanate, examples of the polyol including (poly)alkylene glycols such as (poly)ethylene glycol, (poly)propylene glycol, (poly)butylene glycol, and (poly)tetramethylene glycol, ethylene oxide-modified compounds, propylene oxide-modified compounds, butylene oxide-modified compounds, and tetrahydrofuran-modified compounds of alkylene glycols such as ethylene glycol, propanediol, propylene glycol, tetramethylene glycol, pentamethylene glycol, hexanediol, neopentyl glycol, glycerin, trimethylolpropane, pentaerythritol, diglycerin, ditrimethylolpropane, and dipentaerythritol, copolymers of ethylene oxide and propylene oxide, and copolymers of propylene glycol and tetrahydrofuran, and exmples of the polyisocyanate including p-phenylene diisocyanate, m-phenylene diisocyanate, p-xylene diisocyanate, m-xylene diisocyanate, 2,4-tolylene diisocyanate, 2,6-tolylene diisocyanate, 4,4'-diphenylmethane diisocyanate, 3,3'-dimethyldiphenyl-4,4'-diisocyanate, 3,3'-diethyldiphenyl-4,4'-diisocyanate, naphthalene diisocyanate, isophorone diisocyanate, hexamethylene diisocyanate, 4,4'-dicyclohexylmethane diisocyanate, hydrogenated xylene diisocyanate, norbornene diisocyanate, lysine diisocyanate, biuret compounds of one or more types of isocyanate monomers, and isocyanurate compounds obtained by trimerizing the above diisocyanate compound; epoxy (meth)acrylates obtained by reacting an alkylene type epoxide such as (poly)glycidyl ethers of glycols such as (poly)ethylene glycol, (poly)propylene glycol, (poly)butylene glycol, (poly)tetramethylene glycol, and neopentyl glycol, (poly)glycidyl ethers of alkylene oxide modified compounds of glycols, (poly)glycidyl ethers of aliphatic polyhydric alcohols such as trimethylolpropane, trimethylolethane, glycerin, diglycerin, erythritol, pentaerythritol, sorbitol, 1,4-butanediol, and 1,6-hexanediol, and (poly)glycidyl ethers of alkylene oxide modified compound of an aliphatic polyhydric alcohol.

Examples of the compound having a polyoxyalkylene chain and vinyl ether groups include, but are not limited to, divinyl ethers such as diethylene glycol divinyl ether, triethylene glycol divinyl ether, polyethylene glycol divinyl ether, dipropylene glycol divinyl ether, tripropylene glycol divinyl ether, polypropylene glycol divinyl ether, di(tetramethylene glycol) divinyl ether, tri(tetramethylene glycol) divinyl ether, poly(tetramethylene glycol) divinyl ether, di(hexamethylene glycol) divinyl ether, tri(hexamethylene glycol) divinyl ether, poly(hexamethylene glycol) divinyl ether; monovinyl ethers having a hydroxyl group, such as ethylene glycol methyl vinyl ether, diethylene glycol methyl vinyl ether, triethylene glycol methyl vinyl ether, polyethylene glycol methyl vinyl ether, propylene glycol methyl vinyl ether, dipropylene glycol methyl vinyl ether, tripropylene glycol methyl vinyl ether, polypropylene glycol methyl vinyl ether, tetramethylene glycol methyl vinyl ether, di(tetramethylene glycol) methyl vinyl ether, tri(tetramethylene glycol) methyl vinyl ether, poly(tetramethylene glycol) methyl vinyl ether, 1,6-hexanediolmethyl vinyl ether, di(hexamethylene glycol) methyl vinyl ether, tri(hexamethylene glycol) methyl vinyl ether, poly(hexamethylene glycol) methyl vinyl ether, diethylene glycol monovinyl ether, polyethylene glycol monovinyl ether, 3-hydroxypropyl vinyl ether, 2-hydroxy-2-methylethyl vinyl ether, dipropylene glycol monovinyl ether, polypropylene glycol monovinyl ether, 4-hydroxybutyl vinyl ether, and 1,6-hexanediol monovinyl ether; vinyl ethers having a urethane bond obtained by the urethanization reaction of the monovinyl ether having a hydroxyl group listed above and isocyanate such as m-isopropenyl-α,α-dimethylbenzyl isocyanate, p-phenylene diisocyanate, m-phenylene diisocyanate, p-xylene diisocyanate, m-xylene diisocyanate, 2,4-tolylene diisocyanate, 2,6-tolylene diisocyanate, 4,4'-diphenylmethane diisocyanate, 3,3'-dimethyldiphenyl-4,4'-diisocyanate, 3,3'-diethyldiphenyl-4,4'-diisocyanate, naphthalene diisocyanate, propyl isocyanate, isophorone diisocyanate, hexamethylene diisocyanate, 4,4'-dicyclohexylmethane diisocyanate, hydrogenated xylene diisocyanate, norbornene diisocyanate, and lysine diisocyanate; vinyl ethers having an ester bond obtained by the esterification reaction of the monovinyl ether having a hydroxyl group with a carboxylic acid or an acid anhydride thereof, such as formic acid, acetic acid, propionic acid, valeric acid, benzoic acid, maleic acid, fumaric acid, itaconic acid, citraconic acid, tetrahydrophthalic acid, Het acid, himic acid, chlorendic acid, dimer acid, adipic acid, succinic acid, alkenylsuccinic acid, sebacic acid, azelaic acid, 2,2,4-trimethyladipic acid, 1,4-cyclohexanedicarboxylic acid, terephthalic acid, 2-sodiumsulfoterephthalic acid, 2-potassium sulfoterephthalic acid, isophthalic acid, 5-sodium sulfoisophthalic acid, or 5-potassium sulfoisophthalic acid, di-lower alkyl esters of 5-sodium-sulfoisophthalic acid, such as a dimethyl or diethyl ester of 5-sodium-sulfoisophthalic acid, and orthophthalic acid, 4-sulfophthalic acid, 1,10-decamethylenedicarboxylic acid, muconic acid, oxalic acid, malonic acid, glutaric acid, trimellitic acid, hexahydrophthalic acid, tetrabromophthalic acid, methylcyclohexenetricarboxylic acid, or pyromellitic acid, or an acid anhydride thereof.

Examples of the compound having a polyoxyalkylene chain and a (meth)acrylamide group include N-ethoxyethyl(meth)acrylamide and N-ethoxyethoxy(meth)acrylamide.

Examples of the compound having a polyoxyalkylene chain and a vinyl carboxylate group include vinyl ethoxyethoxyacetate.

Examples of the compound having a polyoxyalkylene chain and a styryl group include 4-(ethoxyethoxy)styrene.

Examples of the compound having a polyoxyalkylene chain and an unsaturated dicarboxylic acid residue include maleates such as di(ethoxyethoxy) maleate; fumarates such as di(ethoxyethoxy) fumarate; and esterification reaction of polyhydric unsaturated carboxylic acid such as maleic acid or fumaric acid and (poly)alkylene polyol.

Examples of the polymerizable compound having a polyoxyalkylene chain used in the present invention are not limited to the compounds listed above. These compounds can be used alone, or plural kinds of them can be used in combination.

In the photopolymerizable composition used in the present invention, a general-purpose polymerizable compound having no polyoxyalkylene chain can be used in combination with the polymerizable compound having a maleimide compound and a polyoxyalkylene chain listed above. Examples of the compound include maleimide compounds, (meth)acrylates, vinyl ether compounds, (meth)acrylamide derivatives, vinyl carboxylate derivatives, styrene derivatives, and unsaturated polyesters. Among these compounds, (meth)acrylates and vinyl ether compounds are preferred.

The amount of the photopolymerizable maleimide compound in the composition comprising an electrolyte, a polymerizable compound having a polyoxyalkylene chain and a photopolymerizable maleimide compound is not specifically limited, but is preferably 10% by weight or more, and particularly preferably 20% by weight or more, based on the entire polymerizable compound in view of the polymerization rate.

In that case, the amount of the photopolymerizable compound having a polyoxyalkylene chain in the photopolymerizable composition used in the present invention is preferably 20% by weight or more, and particularly preferably 50% by weight or more, based on the entire polymerizable compound in view of the ionic conductivity.

When using the photopolymerizable maleimide compound having a polyoxyalkylene chain, the amount of the photopolymerizable maleimide compound having a polyoxyalkylene chain in the composition is preferably 20% by weight or more, and particularly preferably 50% by weight or more, based on the entire polymerizable compound in view of the polymerization rate and ionic conductivity.

When using the general-purpose polymerizable compound having no polyoxyalkylene chain in combination, the amount is preferably 50% by weight or less, and particularly preferably 20% by weight or less, based on the entire polymerizable compound because the ionic conductivity is reduced when the amount is too large.

When using the photopolymerizable maleimide compound having a polyoxyalkylene chain, the monofunctional maleimide compound having a polyoxyalkylene chain is preferably used in combination with the polyfunctional maleimide compound having a polyoxyalkylene chain in view of an improvement in ionic conductivity. In this case, the amount of the monofunctional maleimide compound is preferably within a range from 5 to 50% by weight based on the entire polymerizable compound in order to satisfy rigidity of a solid polymer electrolyte and to completely separate a negative electrode from a positive electrode. A tri- or polyfunctional maleimide compound is useful to form a three-dimensional matrix and the amount is preferably within a range from 2 to 30% by weight based on the entire polymerizable compound from the same point of view. When using the polymerizable compound having a polyoxyalkylene chain, the amount is the same.

The electrolyte used in the solid polymer electrolyte of the present invention is not specifically limited, as long as it is an electrolyte which is conventionally used as the electrolyte, and examples thereof include alkali metal salts, quaternary ammonium salts, quaternary phosphonium salts, and transition metal salts.

When using the solid polymer electrolyte of the present invention in lithium ion cells or lithium metal cells, a salt containing lithium ions is preferred. Examples of the salt containing lithium ions include LiPF₆, LiSbF₆, LiAsF₆, LiBF₄, LiClO₄, CF₃SO₃Li, (CF₃SO₂)₂NLi, C₄F₉SO₃Li, C₈F₁₇SO₃Li, and LiAlCl₄.

When using the solid polymer electrolyte of the present invention in electric double layer condensers, electrochromic elements and solar cells, it may contain ions which serve as a carrier as a result of application of electric charges, and examples thereof include NaClO₄, NaI, KClO₄, KI, (CH₃)₄NBF₄, (CH₃)₄PBF₄ and AgClO₄, in addition to the lithium salts listed above.

In the case in which the solid polymer electrolyte is in the form of a gel, a solvent can be added to the photopolymerizable composition used in the present invention. Examples of the solvent include carbonate-type solvents such as ethylene carbonate, propylene carbonate, butylene carbonate, dimethyl carbonate, and diethyl carbonate; lactone-type solvents such as γ-butyrolactone, γ-valerolactone, δ-valerolactone, and 3-methyl-1,3-oxazolin-2-one; and ether-type solvents such as methylal, 1,2-dimethoxyethane, 1,2-diethoxyethane, diethylene glycol diethyl ether, alkoxypolyalkylene glycol, tetrahydrofuran, and 2-methyl tetrahydrofuran.

The electrolyte can be used as long as the solubility does not exceed the solubility in the polymerizable compound such as maleimide compound and the solvent, which constitute the photopolymerizable composition used in the present invention. Although the solubility varies depending on the polymerizable compound and the solvent, which constitute the composition, and cannot be defined unconditionately, critical solubility of the electrolyte is commonly used to maximize the ionic conductivity. The amount of the electrolyte is preferably within a range from 0.5 to 50% by weight, and particularly preferably from 1 to 20% by weight, based on the polymerizable compound and solvent which constitute the composition.

When using as a solvent-free solid polymer electrolyte, the solid polymer electrolyte of the present invention can be obtained by dissolving an electrolyte and a polymerizable compound into a low-boiling point solvent among the above solvents, casting the solution into one electrode or a releasable polymer film and distilling off the solvent under reduced pressure, followed by irradiation with light. In this case, after distilling off the solvent, the concentration must be adjusted so that the electrolyte is not deposited. Also the electrolyte can be dissolved in the polymerizable compound without using the solvent.

When using as a gel-like solid polymer electrolyte, the greater the amount of the electrolyte solution, the more the ionic conductivity is improved. Too large an amount is not preferred because the mechanical strength of the solid polymer electrolyte tends to be reduced. The amount of the electrolyte solution is preferably 12 times, and particularly 8 times, by weight, smaller than that of the polymerizable compound.

When using the solid polymer electrolyte of the present invention in electric double layer condensers and lithium cells, low redox potential electrode material containing alkali metal ions as a carrier, such as alkali metal, alkali metal alloy, or carbon material; lithium metal, lithium-aluminum alloy, lithium-lead alloy, lithium-antimony alloy, carbon material; and fullerenes, such as those of natural graphite, artificial graphite, gas phase method graphite, petroleum coke, coal coke, pitch-type carbon, polyacene or C60 are used as a negative electrode active material.

When using the solid polymer electrolyte of the present invention in electric double layer condensers and lithium cells, a high redox potential electrode material such as metal oxide, metal sulfide, conductive polymer or carbon material; and cobalt oxide, manganese oxide, vanadium oxide, nickel oxide, molybdenum oxide, molybdenum sulfide, titanium sulfate or vanadium sulfide are used as a positive electrode active material.

Also a conductive polymer can be used as positive and/or negative electrode active materials. Examples of the conductive polymer, which can be used for the purposes, include polyacetylenes and derivatives thereof, polyparaphenylenes and derivatives thereof, polyparaphenylenevinylenes and derivatives thereof, polypyrroles and derivatives thereof, polythiophenes and derivatives thereof, polyanilines and derivatives thereof, and polyacenes.

When using the solid polymer electrolyte of the present invention in electrochromic displays, tungsten oxide, methylviologen and derivative thereof, and polypyrrole and derivative thereof can be used as one electrode active material.

When using the solid polymer electrolyte of the present invention in wet solar cells, an inorganic semiconductor such as silicon, zinc oxide, titanium oxide or cadmium sulfide, the inorganic semiconductor sensitized with an organic pigment such as methylviologen, ruthenium bipyridyl complex, porphyrin or phthalocyanine, a thin film containing an organic pigment such as perylene and derivative thereof, porphyrin and derivative thereof or phthalocyanine and derivative thereof, and the above conductive polymer can be used as one electrode active material.

As the method of constructing these devices using the solid polymer electrolyte of the present invention include (1) a method of coating a photopolymerizable composition used in the present invention on a positive electrode active material, thereby polymerizing the photopolymerizable composition by irradiation with light and laminating a negative electrode active material layer to construct a device, (2) a method of coating a photopolymerizable composition used in the present invention on a negative electrode active material, thereby polymerizing the photopolymerizable composition by irradiation with light and laminating a positive electrode active material layer to construct a device, (3) a method of impregnating a nonwoven fabric or a polyethylene mesh with a photopolymerizable composition used in the present invention, thereby polymerizing the photopolymerizable composition by irradiation with light and laminating positive and negative electrode active material layers to construct a device, (4) a method of facing positive and negative electrode active material layers with each other at a fixed distance, injecting a photopolymerizable composition used in the present invention therebetween, thereby polymerizing the photopolymerizable composition used in the present invention by irradiation with light through the positive or negative electrode active material layer to construct a device, and (5) a method of casting on a releasable film, thereby polymerizing a photopolymerizable composition used in the present invention by irradiation with light and interposing the polymerized composition between positive and negative electrode active material layers to construct a device.

As the method of coating the photopolymerizable composition used in the present invention, for example, conventionally known methods such as doctor blade methods, spin coating methods, impregnation methods, injection methods, and casting methods can be used.

The photopolymerizable composition used in the present invention has a peculiar spectral sensitivity at a wavelength within a range from 200 to 400 nm and can be polymerized by irradiating with ultraviolet light or visible light having a wavelength within a range from 180 to 500 nm in the absence of a general-purpose photopolymerization initiator and light having a wavelength of 254 nm, 308 nm, 313 nm or 365 nm is particularly effective to polymerize the photopolymerizable composition used in the present invention. Also, the photopolymerizable composition used in the present invention can be polymerized in air and/or an inert gas.

Examples of a source for emitting ultraviolet light or visible light having a wavelength within a range from 180 to 500 nm include a low pressure mercury lamp, medium pressure mercury lamp, high pressure mercury lamp, metal halide lamp, chemical lamp, black light lamp, mercury-xenon lamp, excimer lamp, short arc lamp, helium-cadmium laser, argon laser, excimer laser and sunlight.

In the photopolymerizable composition used in the present invention, various non-reactive compounds can be appropriately used in combination.

A lithium ion secondary cell as an example of a device constructed using the solid polymer electrolyte of the present invention will now be described. A schematic sectional view shown in Fig. 1 is an example of a thin type lithium secondary cell and has a structure obtained by polymerizing a photopolymerizable composition 2 used in the present invention by irradiation with ultraviolet light and interposing the polymerized composition between a positive electrode active material 1 and a negative electrode active material 3. The positive and negative electrode active material are formed on a current collector 4 and, furthermore, a film thickness of an electrolyte is controlled to 0.1 mm by a spacer 5 and the electrolyte is sealed with an insulating resin sealing agent 6. The lithium ion secondary cell thus constructed is sealed with the insulating resin sealing agent 7. The reference symbol 8 denotes a lead wire. This example is an example of the entire solid device constructed by using the solid polymer electrolyte of the present invention and the scope of application of the present invention is not limited.

The photopolymerizable composition used in the present invention can form a polymer without using a general-purpose photopolymerization initiator. Therefore, by using the solid polymer electrolyte of the present invention, deterioration of device characteristics caused by a conventional general-purpose photopolymerization initiator can be prevented. Therefore, the solid polymer electrolyte can be used electrochemical devices such as primary cells, secondary cells, condensers, electrochromic displays and wet solar cells.

### EXAMPLES

The following Examples and Comparative Examples further illustrate the present invention in detail, but the present invention is not limited to the scope of the Examples. In the following Examples and Comparative Examples, percentages are by weight unless otherwise specified.

### (Example 1)

Polyethylene glycol (number-average molecular weight: 400) bismaleimidoacetate (abbreviated to MIAPEG400) as a photopolymerizable compound and the same amount of LiPF₆/ethylenecarbonate-propylenecarbonate (volume ratio: 50/50) solution having a concentration of 0.5 mol/L was added to form a uniform solution and the solution was coated on a polyethylene terephthalate film (hereinafter referred to as a PET film) in a thickness of 100 µm.

This composition was irradiated with ultraviolet light at an amount of 900 J/m² from a 120 W/cm medium pressure mercury lamp to obtain a transparent self-supporting film made of a gel-like solid polymer electrolyte having a thickness of about 50 µm.

### (Example 2)

In the same manner as in Example 1, except that polytetramethylene glycol (number-average molecular weight 250) bismaleimidoacetate (abbreviated to MIAPTMG250) was used in place of MIAPEG400 in Example 1, a transparent self-supporting film made of a gel-like solid polymer electrolyte having a thickness of about 50 µm was obtained.

### (Example 3)

In the same manner as in Example 1, except that polytetramethylene glycol (number-average molecular weight 650) bismaleimidoacetate (abbreviated to MIAPTMG650) was used in place of MIAPEG400 in Example 1, a transparent self-supporting film made of a gel-like solid polymer electrolyte having a thickness of about 50 µm was obtained.

### (Example 4)

In the same manner as in Example 1, except that a mixture of MIAPEG400 and polyethylene glycol (number-average molecular weight 400) diacrylate (abbreviated to PEG400DA) at a weight ratio of 1/1 was used in place of MIAPEG400 in Example 1, a transparent self-supporting film made of a gel-like solid polymer electrolyte having a thickness of about 50 µm was obtained.

### (Example 5)

In the same manner as in Example 1, except that a mixture of tetrahydrofuryl maleimidoacetate (abbreviated to MIATHF) and polyethylene glycol (number-average molecular weight 400) diacrylate (abbreviated to PEG400DA) at a weight ratio of 1/2 was used in place of MIAPEG400 in Example 1, a transparent self-supporting film made of a gel-like solid polymer electrolyte having a thickness of about 50 µm was obtained.

### (Comparative Example 1)

In the same manner as in Example 1, except that PEG400DA was used in place of MIAPEG400 in Example 1, irradiation with ultraviolet light was conducted, however, the polymerization did not occur and a self-supporting film could not be obtained.

As is apparent from Example 1 to 5 and Comparative Example 1, when using the photopolymerizable composition used in the present invention, a gel-like solid polymer electrolyte is obtained and the material of the present invention is excellent.

### (Example 6)

Using a glass substrate having a deposited film made of a 0.1 µm thick indiumtin oxide (ITO) as an electrode, a cell was produced via a 0.14 mm thick spacer. Using a polyethylene glycol (number-average molecular weight: 400) bismaleimidoacetate (abbreviated to MIAPEG400) as a photopolymerizable compound, a solution was prepared by dissolving the same weight of the photopolymerizable compound in a solution of LiPF₆/ethylenecarbonate-propylenecarbonate (volume ratio: 50/50) having a concentration of 0.5 mol/L and then injected into the cell.

Using a 120 W/cm medium pressure mercury lamp, the photopolymerizable compound was polymerized by irradiating with ultraviolet light at an amount of 24000 J/m² through a glass with ITO and the cell was placed in a glove box filled with dry argon. Then, the conductivity at a frequency of 1 KHz was measured at 25°C by applying 100 mV according to an impedance method. The conductivity at a frequency of a solid polymer electrolyte (wherein a resistance value of an ITO electrode is corrected) of 1 KHz is shown in Table 1.

### (Example 7)

In the same manner as in Example 6, except that polytetramethylene glycol (number-average molecular weight: 250) bismaleimidoacetate (abbreviated to MIAPTMG250) was used in place of MIAPEG400 in Example 6, the conductivity of the solid polymer electrolyte was measured. The results are shown in Table 1.

### (Example 8)

In the same manner as in Example 6, polytetramethylene glycol (number-average molecular weight: 650) bismaleimidoacetate (abbreviated to MIAPTMG650) was used in place of MIAPEG400 in Example 6, the conductivity of the solid polymer electrolyte was measured. The results are shown in Table 1.

### (Example 9)

In the same manner as in Example 6, except that a mixture of MIAPTMG250 and polyethylene glycol (number-average molecular weight: 400) diacrylate (abbreviated to PEG400DA) at a weight ratio of 1/1 was used in place of MIAPEG400 in Example 6, the conductivity of the solid polymer electrolyte was measured. The results are shown in Table 1.

### (Example 10)

In the same manner as in Example 6, except that a mixture of tetrahydrofurylmaleimide acetate (abbreviated to MIATHF) and polyethylene glycol (number-average molecular weight: 400) diacrylate (abbreviated to PEG400DA) at a weight ratio of 1/2 was used in place of MIAPEG400 in Example 6, the conductivity of the solid polymer electrolyte was measured. The results are shown in Table 1.

### (Comparative Example 2)

In the same manner as in Example 6, except that PEG400DA containing 2% by weight of "Irgacure 184" (photopolymerization initiator) was used in place of MIAPEG400 in Example 6, the conductivity of the solid polymer electrolyte was measured. The results are shown in Table 1.

**Table 1**

| | Photopolymerizable compound | Conductivity (S/cm) |
|---|---|---|
| Example 6 | MIAPEG400 | 1.6 × 10⁻⁴ |
| Example 7 | MIAPTMG250 | 8.2 × 10⁻⁵ |
| Example 8 | MIAPTMG650 | 1.3 × 10⁻⁴ |
| Example 9 | MIAPTMG250/PEG400DA | 7.6 × 10⁻⁵ |
| Example 10 | MIATHF/PEG400DA | 5.3 × 10⁻⁵ |
| Comparative Example 2 | PEG400DA (using Irgacure 184) | 2.2 × 10⁻⁵ |

As is apparent from the results shown in Table 1, the conductivity of the solid electrolyte obtained by polymerizing the photopolymerizable composition used in the present invention under irradiation of ultraviolet light is higher than that of the solid electrolyte obtained by using a composition containing polyethylene glycol (number-average molecular weight 400) diacrylate as a polymerization component and a general-purpose photopolymerization initiator.

### (Examples 11 to 15 and Comparative Example 3)

In place of the measurment of the change of the electrolyte during the repeating of the charge-discharge cycle, the change of the conductivity during the application of alternating current was observed.

The cells obtained in the same manner as in Examples 6 to 10 and Comparative Example 2 were placed in a glove box filled with dry argon maintained at 25°C and 100 mV was applied at 1 KHz, and then the conductivity after 24 hours was measured. The results are summarized in Table 2.

**Table 2**

| | Photopolymerizable compound | Conductivity (S/cm) | |
|---|---|---|---|
| | | Upon beginning of measurement | After 24 hours |
| Example 11 | MIAPEG400 | 1.6 × 10⁻⁴ | 1.5 × 10⁻⁴ |
| Example 12 | MIAPTMG250 | 8.2 × 10⁻⁵ | 8.1 × 10⁻⁵ |
| Example 13 | MIAPTMG650 | 1.3 × 10⁻⁴ | 1.1 × 10⁻⁴ |
| Example 14 | MIAPTMG250/PEG400DA | 7.6 × 10⁻⁵ | 7.3 × 10⁻⁵ |
| Example 15 | MIATHF/PEG400DA | 5.3 × 10⁻⁵ | 4.7 × 10⁻⁵ |
| Comparative Example 3 | PEG400DA (using Irgacure 184) | 2.2 × 10⁻⁵ | 3.5 × 10⁻⁶ |

As is apparent from the results shown in Table 2, the conductivity of the cells formed by using the photopolymerizable composition used in the present invention after 24 hours is almost theasame of that of the beginning. On the other hand, the conductivity of the cell of Comparative Example 3 formed by using the general-purpose photopolymerization initiator after 24 hours was reduced by approximately 1/10 of the beginnning.

Therefore, it is believed that, since the lithium ion secondary cell formed by using the photopolymerizable composition used in the present invention is superior in conductive characteristics during repeating of the charge-discharge cycle, the charge-discharge capacity is not reduced.

Also, it is believed that the other electrochemical elements formed by using the photopolymerizable composition used in the present invention are superior in stability.

### INDUSTRIAL APPLICABILITY

The solid polymer electrolyte of the present invention exhibits ionic conductivity at the practical level, and moreover, has such an advantage that charge-discharge capacity of the solid polymer electrolyte is less likely to be reduced even when the charge-discharge operation is repeated because the solid polymer electrolyte uses no photopolymerization initiator.

## Claims

1. A solid polymer electrolyte made of a solid obtained by photopolymerizing a photopolymerizable composition comprising (a) an electrolyte and (b) a polymerizable compound having a polyoxyalkylene chain, wherein
the photopolymerizable composition contains a photopolymerizable maleimide compound.

2. The solid polymer electrolyte according to claim 1, wherein the photopolymerizable maleimide compound is a compound having an N-alkylmaleimide structure or an N-cycloalkylmaleimide structure.

3. The solid polymer electrolyte according to claim 2, wherein the compound having an N-alkylmaleimide structure or an N-cycloalkylmaleimide structure is a compound having a maleimide group, which is represented by the general formula (1) : 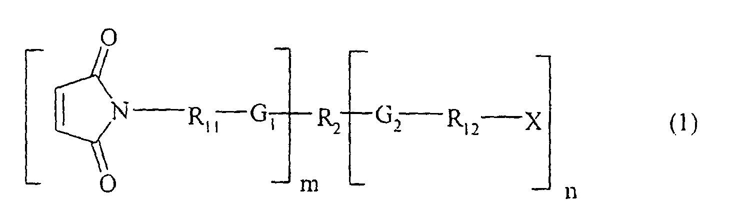 wherein m represents an integer of 1 to 6; n represents an integer of 0 to 5 and the sum of m and n is an integer of 1 to 6; R₁₁ and R₁₂ each independently represents a straight-chain or branched aliphatic hydrocarbon group, or an alicyclic hydrocarbon group; G₁ and G₂ each independently represents at least one group selected from the group consisting of a single bond, a straight-chain or branched aliphatic hydrocarbon group, an alicyclic hydrocarbon group, an ether group, an ester group, a urethane group, and a carbonate group; when m + n = 1, R₂ represents at least one group selected from the group consisting of a hydrogen atom, a straight-chain or branched aliphatic hydrocarbon group, an alicyclic hydrocarbon group, and a polyoxyalkylene chain having a hydroxyl group or an alkyl group at the end and, when m + n ≥ 2, R₂ represents at least one group selected from the group consisting of a hydrogen atom, a straight-chain or branched aliphatic hydrocarbon group, an alicyclic hydrocarbon group, and a polyoxyalkylene chain; and X represents a polymerizable functional group.

4. The solid polymer electrolyte according to claim 2, wherein the photopolymerizable maleimide compound is a compound having a polyoxyalkylene chain.

5. A cell comprising electrodes and the solid polymer electrolyte of claim 1 interposed between said electrodes.
